# FASCICULE DE BREVET EUROPEEN

(11) **EP 0 314 988 B1**
(45) Date de publication et mention de la délivrance du brevet: **10.02.1993**
(21) Numéro de dépôt: 88117467.6
(22) Date de dépôt: 20.10.1988
(51) Int. Cl.: B60B 21/12, B60C 17/06, B60B 21/02

(54) **Jante pour pneumatique comprenant un boudin qui permet de rouler à l'état dégonflé**
Felge mit Wulsteinlage zum Fahren im drucklosen Zustand
Wheel for pneumatic tyres with an insert for running in a deflated condition

(30) Priorité: 26.10.1987 FR 8714895
(43) Date de publication de la demande: 10.05.1989
(73) Titulaire: COMPAGNIE GENERALE DES ETABLISSEMENTS MICHELIN-MICHELIN & CIE, F-63000 Clermont-Ferrand (FR)
(72) Inventeur: Pompier, Jean-Pierre, F-63530 Volvic (FR)
(74) Mandataire: Bauvir, Jacques

(56) Documents cités:
- GB-A- 2 160 482
- PATENT ABSTRACTS OF JAPAN, vol. 10, no. 77 (M-464)[2134], 26 mars 1986, page 70 M 464; & JP-A-60 219 101 (YOKOHAMA GOMU K.K.) 01-11-1985

## Description

La présente invention concerne les jantes pour pneumatique spécifiquement conçues pour réaliser un ensemble de sécurité comportant, outre la jante et le pneumatique, un boudin approximativement toroïdal en caoutchouc alvéolaire, destiné à supporter la charge en cas de perte de pression du pneumatique.

De tels dispositifs de sécurité sont connus par le brevet FR 1 450 638 (correspondant au préambule de la revendication 1) qui en expose le principe de fonctionnement et décrit le comportement d'un boudin en caoutchouc alvéolaire sous l'effet de la force centrifuge. Il propose de mettre la face radialement intérieure du boudin en communication avec la pression atmosphérique, alors que la pression de gonflage agit sur la face radialement extérieure de ce boudin. De cette différence de pression, il résulte une pression dirigée radialement vers l'intérieur, que la force centrifuge doit compenser avant de pouvoir écarter le boudin du fond de la jante.

Cette disposition s'avère insuffisante pour maintenir le boudin plaqué au fond de la jante, notamment du fait des vitesses élevées dont sont capables les véhicules de tourisme à l'heure actuelle.

La présente invention vise à améliorer l'ancrage d'un boudin en caoutchouc alvéolaire, encore appelé caoutchouc mousse, tout en conservant au dispositif de sécurité dans son ensemble (jante, pneumatique et boudin de support) une simplicité suffisante pour concilier les impératifs de coût, de facilité de montage et de démontage.

La solution repose sur une modification du profil de la jante permettant d'atteindre un ancrage suffisant sans qu'il faille recourir à une complexité plus grande du boudin de support et est décrite dans la revendication 1.

Les figures suivantes sont données dans un but purement illustratif et n'ont bien sûr aucun caractère limitatif.

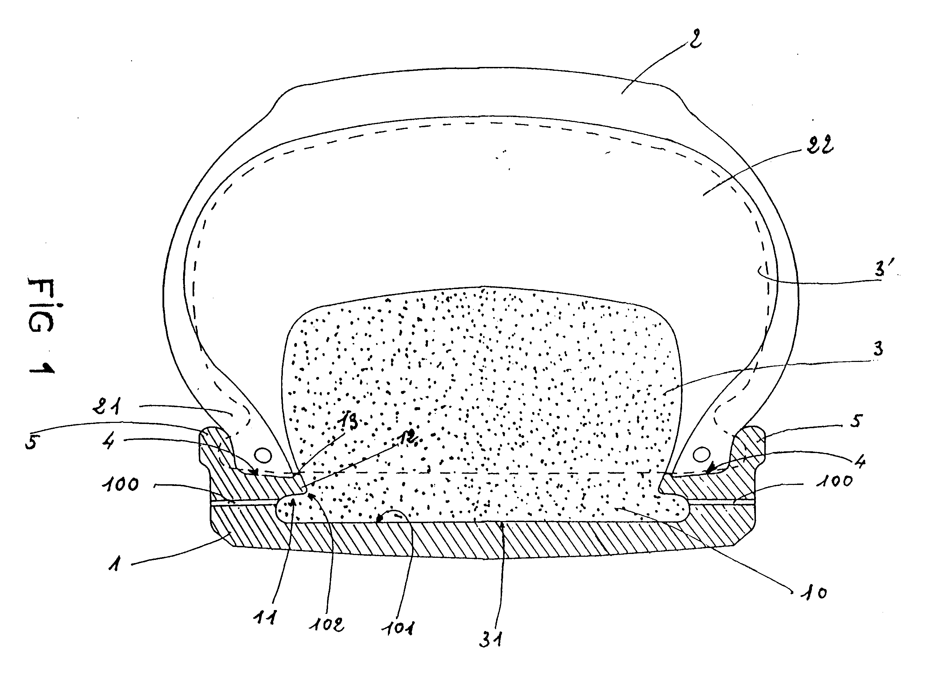

La figure 1 montre une coupe méridienne d'un ensemble de sécurité utilisant une jante selon l'invention.
La figure 2 montre un détail de ladite jante.
La figure 3 montre une variante de ladite jante.

On voit une jante 1 sur laquelle est monté un pneumatique 2. La jante 1 est du type le plus courant pour les véhicules de tourisme : elle est formée en une seule pièce et comporte un creux de montage. C'est le creux de montage lui-même qui constitue la gorge 10 requise par la présente invention. La forme générale de la section méridienne de ladite gorge 10 est celle d'un "U". Ladite jante 1 comporte, de part et d'autre de ladite gorge 10, un siège 4 de bourrelet limité axialement vers l'extérieur par un bord 6 de jante. Le fond 101 de la gorge (base du U) est sensiblement parallèle à l'axe de rotation de la jante 1. Sont montés sur la jante 1 un pneumatique 2 et un boudin 3 en caoutchouc mousse, représenté sur le dessin en traits continus dans la position de montage (volume rétracté sous l'influence de la pression de gonflage, et boudin 3 plaqué sur le fond 101 de la gorge 10).

Comme connu par le brevet FR 1 450 638, on trouve une communication avec la pression atmosphérique afin de plaquer le boudin 3 sur la jante 1 par l'effet de la différence de pression appliquée sur la face radialement intérieure 31 du boudin 3 et sur la face radialement extérieure de celui-ci.

Cette communication est ici réalisée par un orifice 100 de chaque côté de la gorge 10. On peut améliorer le cheminement de l'air vers les orifices 100 par toute disposition adéquate, comme par exemple des stries sur le fond 101 de la gorge 10 ou sur la face radialement intérieure 31 du boudin 3.

La gorge 10 est limitée axialement de part et d'autre par deux parois 102 latérales. Celles-ci s'étendent radialement vers l'extérieur. Lorsque la gorge 10 est constituée par le creux de montage, lesdites parois 102 s'écartent axialement vers l'extérieur. Ceci est sans importance pour l'exécution de la présente invention. Ce qui est essentiel, c'est de trouver, sur chacune de ces parois 102 latérales, une contre-dépouille 11. Par exemple, celle-ci est obtenue en prévoyant un bossage 12 réalisé sur le même principe que le hump 13 maintenant axialement le bourrelet 21 du pneumatique 2.

L'ancrage du boudin 3 est donc obtenu grâce au fait que la paroi latérale 102, lorsque l'on se déplace radialement vers l'intérieur, le long de celle-ci, s'écarte axialement vers l'extérieur à un endroit au moins. Il suffit donc de dimensionner le boudin 3 pour que celui-ci, étant monté sur la jante et étant sous l'effet de la pression nominale, sa largeur axiale soit, radialement à la hauteur de la contre-dépouille 11, au moins aussi large que l'espace disponible, c'est-à-dire plus large que l'espace disponible radialement juste au dessus de la contre-dépouille 11. A titre d'illustration, on a fait figurer en traits discontinus 3' le même boudin tel qu'il se disposerait, coaxialement à la jante 1, en l'absence de toute contrainte due au montage. A l'état libre de toute contrainte, le boudin occupe donc un volume bien plus grand que à l'état de montage (boudin 3).

Lorsque l'on monte un pneumatique 2 sans chambre à air, comme représenté, il faut que, au montage, le boudin 3 appuie axialement sur le bossage 12 suffisamment pour que cette zone assure l'échanchéité de la cavité pneumatique, 22 par rapport à la zone mise en communications avec la pression atmosphérique, limitée par lesdits bossages 12 et située radialement à l'intérieur de ceux-ci. On insère très facilement un boudin 3 sensiblement plus large que l'espace disponible entre les bossages 12 en élevant, au cours du montage, la pression de gonflage à une valeur suffisante pour obtenir la rétraction dimensionnelle nécessaire, puis en ramenant la pression à sa valeur nominale. Avec une précontrainte du boudin 3 contre les bossages 12, l'effet de la force centrifuge, même à pression très réduite, n'entraîne pas une rupture d'étanchéité au droit des bossages 12 (étanchéité entre la cavité pneumatique 22 et la zone mise en communication avec la pression atmosphérique).

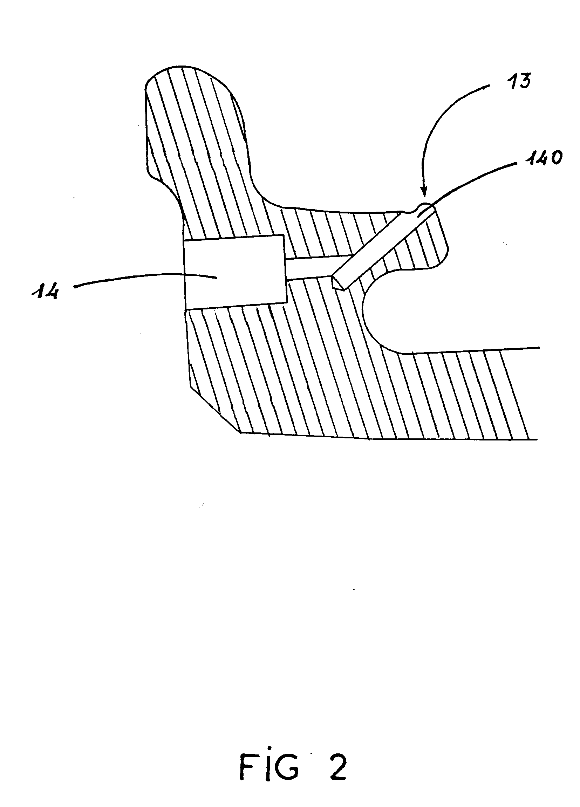

Le détail montré à la figure 2 indique comment disposer la valve de gonflage sur une telle jante. On voit un embout 14 destiné à recevoir la valve proprement dite. L'embout 14 est prolongé par une canalisation qui aboutit à une ouverture 140 disposée sur le hump 13. Au départ du gonflage, l'air fuit par les orifices 100. Il suffit de dimensionner lesdits orifices 100 de telle sorte que le débit de fuite soit sensiblement plus faible que le débit de gonflage, pour que le boudin 3 prenne sa configuration et sa place finale, assurant l'étanchéité de l'ensemble. Ou bien on prévoit une occultation provisoire des orifices 100.

De préférence, le profil de la jante est symétrique axialement. Donc les deux contre-dépouilles 11 sont, comme représenté, radialement à la même hauteur, mais ce n'est bien sûr pas indispensable pour lutter contre la centrifugation du boudin 3. On peut également obtenir une contre-dépouille 11 en inclinant la paroi 102 latérale axialement vers l'intérieur. De même, on peut utiliser l'invention avec d'autres types de jante, comme par exemple des jantes prévues pour des pneumatiques à accrochage inversé.

Notons encore que, comme il apparait ci-dessus, les orifices 100 sont destinés à réaliser une communication permanente entre la base d'un boudin 3 en caoutchouc mousse et la pression atmosphérique mais que, si l'on désire rouler avec la jante selon l'invention sans l'équiper d'un boudin mousse 3, avec le seul pneumatique 2, il suffira d'obturer le ou les orifices 100 pour retrouver une jante étanche à l'air de gonflage.

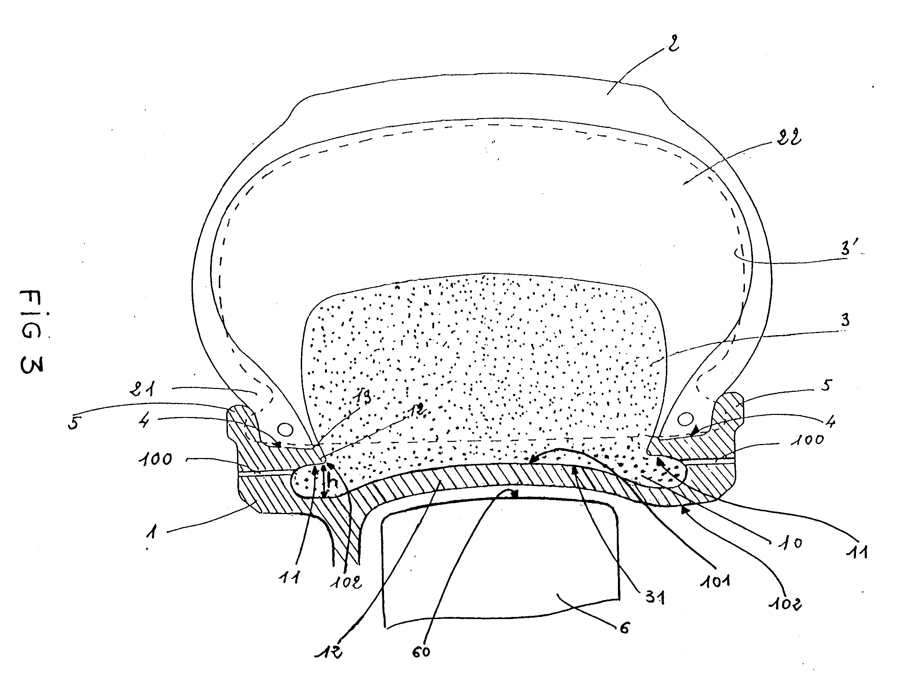

A la figure 3, on a représenté une variante d'exécution qui permet de concilier une bonne retenue du boudin 3 en caoutchouc mousse avec la nécessité de laisser, sous la gorge 10 de la jante 1, un espace suffisant pour les organes de freinage 6. On a constaté que l'on gagne en vitesse limite de retenue du boudin 3 sur le fond 101 de la gorge 10 si on augmente la hauteur h disponible sous la contre-dépouille 11, entre celle-ci et le fond 101 de la gorge 10. L'encombrement maximum des organes de freinage 6 est en général dû aux étriers des freins a disques. On peut prévoir une zone bombée 12 sur le fond 101 de la gorge 10, zone dont la convexité est orientée radialement vers l'extérieur de sorte que la jante 1 correspond à la protubérance causée par les étriers des freins à disques. Comme le sommet 60 desdits étriers dépasse radialement le point radialement le plus bas 102 du fond 101 de la jante 1, il faut engager la jante 1 par dessus l'étrier 6 en la présentant en biais par rapport au moyeu sur lequel elle va être fixée, puis on la bascule a son emplacement final.

## Revendications

1. Jante (1) en une seule pièce pour pneumatique (2), ledit pneumatique (2) étant destiné à être utilisé avec un boudin (3) en caoutchouc alvéolaire de forme sensiblement toroïdale qui permet de rouler à l'état dégonflé, ladite jante (1) ayant une gorge (10), destinée à recevoir ledit boudin (3), dont la section méridienne a approximativement la forme d'un "U" dont la concavité est orientée radialement vers l'extérieur, la base dudit "U" constituant le fond (101) de la gorge (10) étant approximativement parallèle à l'axe de rotation, ladite gorge (10) étant délimitée axialement de part et d'autre par des parois latérales (102) s'étendant radialement vers l'extérieur par rapport au fond (101) de la gorge (10), un orifice (100) destiné à réaliser une communication avec la pression atmosphérique étant prévu dans ladite gorge (10), caractérisée en ce que les parois latérales (102) comportent chacune au moins une contre-dépouille (11) et en ce que ledit orifice (100) est situé radialement vers l'intérieur par rapport aux contre-dépouilles (11) et situé sur chacune desdites parois latérale (102), de sorte que, par rétraction dimensionnelle due au gonflage lors du montage, le boudin prenne sa configuration et sa place finale dans les contre-dépouilles (11) pourvues sur la jante.

2. Jante selon la revendication 1, caractérisé en ce qu'elle est symétrique.

3. Jante selon l'une des revendications 1 ou 2, comportant un hump (13), caractérisée en ce que l'ouverture (140) de gonflage est disposée sur ledit hump (13).

4. Jante selon l'une des revendications 1 à 3, caractérisée en ce que le fond (101) présente une zone (10) bombée dont la convexité est orientée radialement vers l'extérieur.

## Claims

1. A rim (1) for a tire (2), said tire (2) being used with a cellar rubber body (3) of generally toroïdal shape which makes it possible to roll in a deflated condition, said rim (1) having a groove (10) for receiving said body (3), whose cross section has approximately a U shape, the concavity of which is oriented radially outward, a base portion of said U constituting a bottom portion (101) of said groove (10) being approximately parallel to the axis of rotation, said groove being axially delimited on opposite sides thereof by lateral walls (102) extending radially outward relative to said bottom portion (101) of said groove (10), an orifice (100) for achieving communication with atmospheric pressure bing provided in said groove (10), characterized by the fact that the lateral walls (102) each comprise at least one undercut portion (11) and characterized by the fact that said orifice (100) is located radially outward relative to one of said undercut portions (11), and is located on each of said lateral walls (102), whereby, thanks to a dimensional retraction due to inflation pressure, the said body takes its final configuration and place within said undercut portions (11) provided on the rim.

2. A rim according to claim 1, characterized by the fact that said rim is symmetrical.

3. A rim according to claim 1, comprising a hump (13), characterized by the fact that the inflation opening (140) is formed on said hump (13).

4. A rim according to any one of claims 1 to 3, characterized by the fact that bottom portion (101) has a curved zone (10), the convexity of which is oriented radially outward.

## Patentansprüche

1. Einstückige Felge (1) für einen Luftreifen (2), der zur Verwendung zusammen mit einer etwa ringförmigen Wulsteinlage (3) aus Zellkautschuk vorgesehen ist, die ein Abrollen bei ungenügendem Luftdruck erlaubt,
wobei die Felge eine rinnenförmige Auskehlung (10) aufweist, die im Meridianschnitt ungefähr die Form eines "U" besitzt, dessen Höhlung radial nach außen gerichtet ist und dessen Fuß, der den Boden (101) der Auskehlung (10) bildet, etwa parallel zur Drehachse angeordnet ist,
wobei die Auskehlung (10) axial auf beiden Seiten durch Seitenwände (102) begrenzt ist, die in Bezug auf den Boden (101) der Auskehlung (10) radial außen angeordnet sind,
und wobei eine Öffnung (100) zur Herstellung einer Verbindung mit dem Atmosphärendruck in der Auskehlung (10) vorgesehen ist,
**dadurch gekennzeichnet,** daß
die Seitenwände (102) jeweils mindestens eine Einziehung (11) aufweisen und die Öffnung (100) in Bezug auf die Einziehungen (11) radial innenliegend angeordnet und an jeder der Seitenwände (102) vorgesehen ist, und zwar derart, daß die Wulsteinlage aufgrund der Verringerung der Abmessungen durch das Aufpumpen bei der Montage ihre endgültige Gestalt annimmt und ihren endgültigen Platz in den auf der Felge vorgesehenen Einziehungen (11) einnimmt.

2. Felge nach Anspruch 1, dadurch gekennzeichnet, daß sie symmetrisch ist.

3. Felge nach Anspruch 1 oder 2 mit einem Hump (13), dadurch gekennzeichnet, daß die Füllöffnung (140) auf dem Hump (13) angeordnet ist.

4. Felge nach einem der Ansprüche 1 bis 3, dadurch gekennzeichnet, daß der Boden (101) einen gewölbten Bereich (12) aufweist, dessen konvexe Wölbung radial nach außen gerichtet ist.
